# EUROPEAN PATENT SPECIFICATION

(11) **EP 1 057 346 B1**
(45) Date of publication and mention of the grant of the patent: **16.10.2002**
(21) Application number: 99901858.3
(22) Date of filing: 08.02.1999
(51) Int. Cl.: H04N 7/52, G09G 5/06

(54) **PROCESSING OF GRAPHICAL DIGITAL PICTURE DATA IN A DECODER**
DIGITALE VERARBEITUNG VON GRAFISCHEN BILDERN IN EINEM DEKODIERER
TRAITEMENT DE DONNEES D'IMAGES NUMERIQUES GRAPHIQUES DANS UN DECODEUR

(30) Priority: 16.02.1998 EP 98400369
(43) Date of publication of application: 06.12.2000
(73) Proprietor: Canal+ Technologies, 75015 Paris (FR)
(72) Inventor: HAMERY, Dominique, 92500 Rueil Malmaison (FR); MERIC, Jérôme, F-60300 Senlis (FR)
(74) Representative: Cozens, Paul Dennis
(86) International application number: IB9900280
(87) International publication number: WO99041913

(56) References cited:
- WO-A-96/19077
- PATENT ABSTRACTS OF JAPAN vol. 098, no. 006, 30 April 1998 & JP 10 042149 A (FUJI XEROX CO LTD), 13 February 1998
- "LOOK-UP-TABLE CONFIGURATION" IBM TECHNICAL DISCLOSURE BULLETIN, vol. 37, no. 2B, 1 February 1994, page 471/472 XP000433915

## Description

The present invention relates to a decoder for a digital audiovisual transmission system, the decoder comprising a processor means for decompressing and displaying compressed digital picture data and memory means.

Broadcast transmission of digital data is well-known in the field of pay TV systems, where scrambled audiovisual information is sent, usually by a satellite or satellite/cable link, to a number of subscribers, each subscriber possessing a decoder capable of descrambling the transmitted program for subsequent viewing. Terrestrial digital broadcast systems are also known. Recent systems have used the broadcast link to transmit other data, in addition to or as well as audiovisual data, such as computer programs or interactive applications.

In the most basic level of functionality of such systems, digital audio and video data relating to the televised program is transmitted in a compressed format, for example, in accordance with the MPEG-2 compression standard. The decoder receives and decompresses this data in order to regenerate the televised program.

In addition to simple televised program data, it is becoming increasingly common for the decoder to be required to handle other compressed image or graphic data. For example, in the case where the decoder includes web browser capabilities, the processor of the decoder may be required to receive and decompress downloaded digital picture data, for example, still video pictures, graphic icons, moving computer generated images etc. This picture information may be displayed over the normal televised program images.

Such still or moving picture data may be typically received in one of any number of compressed formats that are currently used in the context of PC based web browsers. For example, a picture may be formatted and compressed according to the well-known GIF or PNG standards, where an image is described by a colour look-up table defining a table of colours and a matrix of pixel values referring to this table, the matrix data being compressed according to a known compression procedure to prepare the GIF/PNG picture. Alternatively, the picture may be formatted and compressed as a still MPEG or JPEG image, in which each pixel is directly associated with a red/green/blue colour value.

The graphic processor used by a decoder to prepare the images for display is normally adapted to process such images once they have been decompressed and converted by the general processor into image files in one or more predetermined pixmap formats. For example, the graphic processor may be adapted to display image files submitted in the CLUT4 or CLUT8 formats, in which the principle of a look-up table is adhered to, or in the RGB format, in which each pixel has a RGB value.

These pixmap image file formats reflect the pixel composition of the original image and are distinct from, although closely related to, the compression formats referred to above. GIF/PNG pictures decompress to form a pixmap image file with a look-up table and JPEG/MPEG image files decompress to pixmap files without such a table.

In a PC environment, the processor power and memory space available means that a number of picture files compressed according to different formats may be received, decompressed and displayed concurrently, the graphic processor within a PC being adapted to easily handle multiple formats. In contrast, in a decoder environment, the memory and processor power available are considerably more limited, the graphic processor also having to handle at least the MPEG data associated with the televised transmission. In such a case, it may not be possible to convert and display image files in a plurality of formats.

For example, in the case of an original image formatted in an RGB format and compressed with the JPEG algorithm, the main processor of the decoder may simply decompress and store this image file (and, indeed, all subsequently received image files) in a fixed CLUT format. In this way, the graphic processor will only have to handle one type of image file. Whilst this method enables the decoder to effectively handle multiple format data, there may be an unnecessary loss of image quality. For example, if no other image file is being handled by the graphic processor, it may not be necessary to impose a fixed converted image file format.

It is an object of the present invention to overcome these disadvantages of the prior art.

The object of the invention is achieved by the decoder as defined in appended claim 1 and the method as defined in appended claim 10.

According to the present invention there is provided a decoder for a digital audiovisual transmission system, the decoder comprising a processor for decompressing and displaying compressed digital picture data and a memory, characterised in that the processor is adapted to decompress and store an image file in its substantially original format and subsequently to convert the image file to at least a second format for storage and display, the first and second format versions of the image file being stored contemporaneously in the memory.

The decompression and storage of the original format version of the compressed image enables the decoder thereafter to generate alternate format image files to be sent to the processor for display according to the current capacity and operation of the graphics processor.

For example, in the event that the original image is in a "true colour" or RGB format and the load and operation of the graphics processor permits display in this format, the image may be decompressed and displayed substantially "as is", that is, an image file without look-up table. Nevertheless, a decimation of the number of bits associated with each pixel may be carried out to change the resolution whilst substantially maintaining same format. Equally, in the case of a picture compressed with a look-up table (GIF/PNG), the same look-up table will be stored and referred to in the display of the image.

If a display cannot be effected using the original format, the processor may convert the image file to a different format for display, the original file being nevertheless kept for future use. In this way, the present invention enables the highest quality display to be effected at any time within the memory and processing constraints of the decoder at that moment.

In one embodiment, the processor is adapted to convert the image file into a plurality of formats stored contemporaneously with the original version in a memory of the decoder.

Preferably, the processor is adapted to read and display multiple format versions of an image file stored at that time. For example, the processor may be adapted to display the same image twice in two different screen windows and according to the two different formats used in the windows.

In particular, the processor may be adapted to define a plurality of regions in a graphic layer corresponding to a region of the display, each region being defined in part by a location co-ordinate and by the format version of the image files that may be processed by the processor and displayed in this region.

This division of the screen area into format areas is particularly characteristic of the decoder environment. For example, one region within the graphic layer may correspond to a region where image files in a particular CLUT format may be displayed, whilst another region may be associated with image files in an RGB format.

In such a realisation, the processor is preferably adapted to convert an original image file destined to be displayed in a region into a version corresponding to the format version currently used in that region. For example, where an RGB original format image is to be displayed in the same region where a CLUT format image is already being displayed, the processor will convert the image into the appropriate CLUT format for display.

In one embodiment, the processor is adapted to process images in the graphic layer superimposed over real-time audiovisual digital data and corresponding to one or more layers displayed on the screen beneath the graphic layer. Images in the graphic layer may equally be displayed by the processor superimposed over other types of image file data displayed in layers beneath the graphic layer.

In one embodiment, the processor is adapted to decompress picture data sent in a compression standard that uses a look-up table, for example, the GIF or PNG standard. In addition or alternatively, the processor is adapted to decompress picture data sent in a standard that uses a red/green/blue colour value associated with each pixel, for example, MPEG or JPEG.

As discussed above, the advantage of the two-step decompression and conversion process used in the present invention lies in the ability to process the original format image file in any number of ways. In some circumstances, however, it may be desirable to use a fixed format for all image data.

Therefore, in one preferred embodiment of the invention, the processor is further adapted to directly decompress picture data regardless its compression format into a image file of a predetermined format.

In particular, the processor may be further adapted to directly decompress picture data into a format which uses a colour look-up table, for example, the CLUT4 or CLUT8 format. In addition, or alternatively, the processor may be further adapted to directly decompress picture data into a format which uses a red/green/blue colour value associated with each pixel, for example the RGB16 format.

All functions of decompression and display of data may be integrated in a single processor. Alternatively, the processor may comprise at least a general processor and a graphic processor for handling decompression and display, respectively.

Similarly, the memory used to store the first and second format versions may not necessarily correspond to a single memory unit, such as a RAM or a FLASH, but may correspond to one or more memory areas allocated for this purpose by a controlling application and divided between one or more physical memory devices.

The present invention has been discussed in relation to a decoder apparatus. The present invention equally extends to a method of digital image processing within such a decoder, corresponding to the general and preferred aspects of the invention discussed above.

In the context of the present application the term "digital audiovisual transmission system" refers to all transmission systems for transmitting or broadcasting primarily audiovisual or multimedia digital data. Whilst the present invention is particularly applicable to a broadcast digital television system, the present invention may equally be used in filtering data sent by a fixed telecommunications network for multimedia internet applications etc.

Similarly, the term "decoder" is used to apply to an integrated receiver/decoder for receiving and decrypting an encrypted transmission, the receiver and decoder elements of such a system as considered separately, as well as to a receiver capable of receiving non-encrypted broadcasts. The term equally covers decoders including additional functions, such as web browsers, together with decoders integrated with other devices, for example, integrated VHS/decoder devices, digital televisions or the like.

The term MPEG refers to the data transmission standards developed by the International Standards Organisation working group "Motion Pictures Expert Group" and notably the MPEG-2 standard developed for digital television applications and set out in the documents ISO 13818-1, ISO 13818-2, ISO 13818-3, and ISO 13818-4. In the context of the present patent application, the term includes all variants, modifications or developments of the basic MPEG formats applicable to the field of digital data transmission.

There will now be described, by way of example only, a preferred embodiment of the present invention, with reference to the attached figures, in which:
Figure 1 shows an overview of a digital television system;
Figure 2 shows the elements of the receiver/decoder of Figure 1;
Figure 3 shows in layer form the image data processed by the graphic processor of Figure 2;
Figure 4 shows in detail the graphic layer of Figure 3; and
Figure 5 shows the decompression and conversion steps carried out in a number of cases on compressed image data.

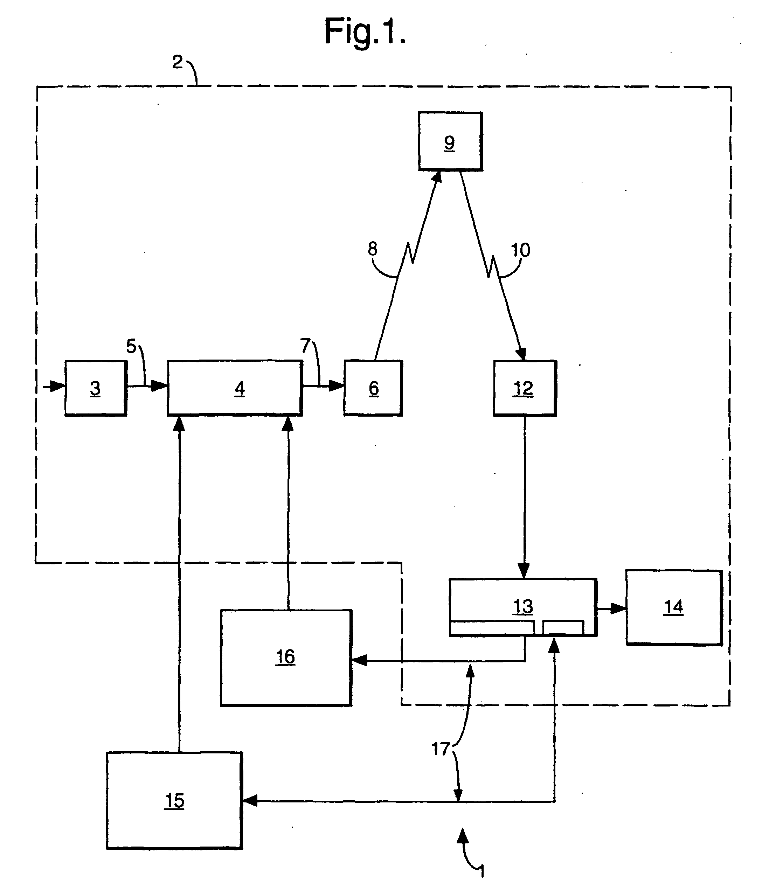

An overview of a digital television system 1 according to the present invention is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14.

Other transport channels for transmission of the data are of course possible, such as terrestrial broadcast, cable transmission, combined satellite/cable links, telephone networks etc.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the decoder 13 having access to an equivalent of the exploitation key stored on a smart card inserted in the decoder to decrypt the encrypted control word and thereafter descramble the transmitted data. A paid-up subscriber will receive, for example, in a broadcast monthly ECM (Entitlement Control Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the decoder, enables the end user to interact with various applications via a modem back channel 17. The modem back channel may also be used for communications used in the conditional access system 15. An interactive system may be used, for example, to enable the viewer to communicate immediately with the transmission centre to demand authorisation to watch a particular event, download an application etc.

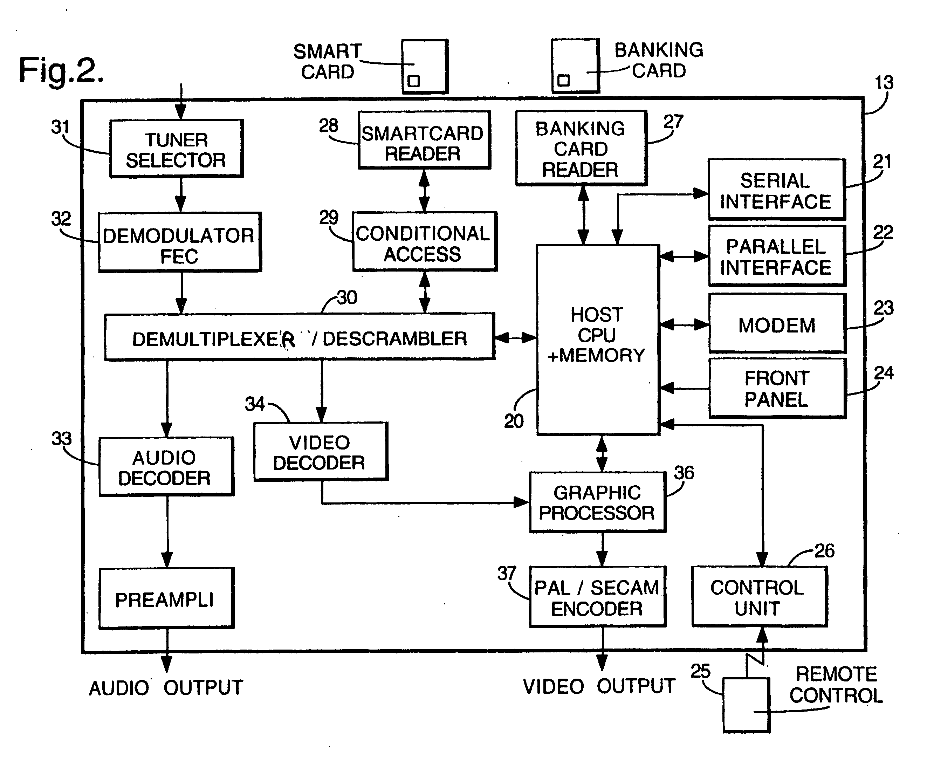

Referring to Figure 2, the elements of the receiver/decoder 13 or set-top box adapted to be used in the present invention will now be described. The elements shown in this figure will be described in terms of functional blocks.

The decoder 13 comprises a central processor 20 including associated memory elements and adapted to receive input data from a serial interface 21, a parallel interface 22, a modem 23 (connected to the modem back channel 17 of Fig 1), and switch contacts 24 on the front panel of the decoder.

The decoder is additionally adapted to receive inputs from an infra-red remote control 25 via a control unit 26 and also possesses two smartcard readers 27, 28 adapted to read bank or subscription smartcards 29, 30 respectively. The subscription smartcard reader 28 engages with an inserted subscription card 30 and with a conditional access unit 29 to supply the necessary control word to a demultiplexer/descrambler 30 to enable the encrypted broadcast signal to be descrambled. The decoder also includes a conventional tuner 31 and demodulator 32 to receive and demodulate the satellite transmission before being filtered and demultiplexed by the unit 30.

Processing of data within the decoder is generally handled by the central processor 20. The software architecture of the central processor may correspond to that used in a known decoder and will not be described here in any detail. It may be based, for example, on a virtual machine interacting via an interface layer with a lower level operating system implemented in the hardware components of the decoder. In terms of the hardware architecture, the decoder will be equipped with a processor, memory elements such as ROM. RAM, FLASH etc. as in known decoders.

In the case of received audio and video signals, and as will be described in more detail below, the MPEG packets containing these signals will be demultiplexed and filtered so as to pass real time audio and video data in the form of a packetised elementary stream (PES) of audio and video data to dedicated audio and video processors or decoders 33, 34. The converted output from the audio processor 33 passes to a preamplifier 35 and thereafter via the audio output of the receiver/decoder. The converted output from the video processor 34 passes via a graphic processor 36 and PAL/SECAM encoder 37 to the video output of the receiver/decoder. The video processor may be of a conventional type, such as the ST 3520A of SGS Thomson.

The graphic processor 36 additionally receives graphic data for display (such as generated images etc) from the central processor 20 and combines this information with information received from the video processor 34 to generate a screen display combining moving images together with overlaid text or other images. An example of a graphic processor adapted to carry out this sort of operation is the CM 9310 of C-CUBE.

In the case of received teletext and/or subtitle data, the conversion of the real time PES data to generate the appropriate images may also be handled by dedicated processors. However, in most conventional systems, this is handled by the general processor 20.

In point of fact, many of functions associated with the elements such as the graphic processor 36, video decoder 34, central processor 20 etc. may be combined or divided out in a number of ways, e.g. to integrate the central and graphic processors in a single processor means etc.

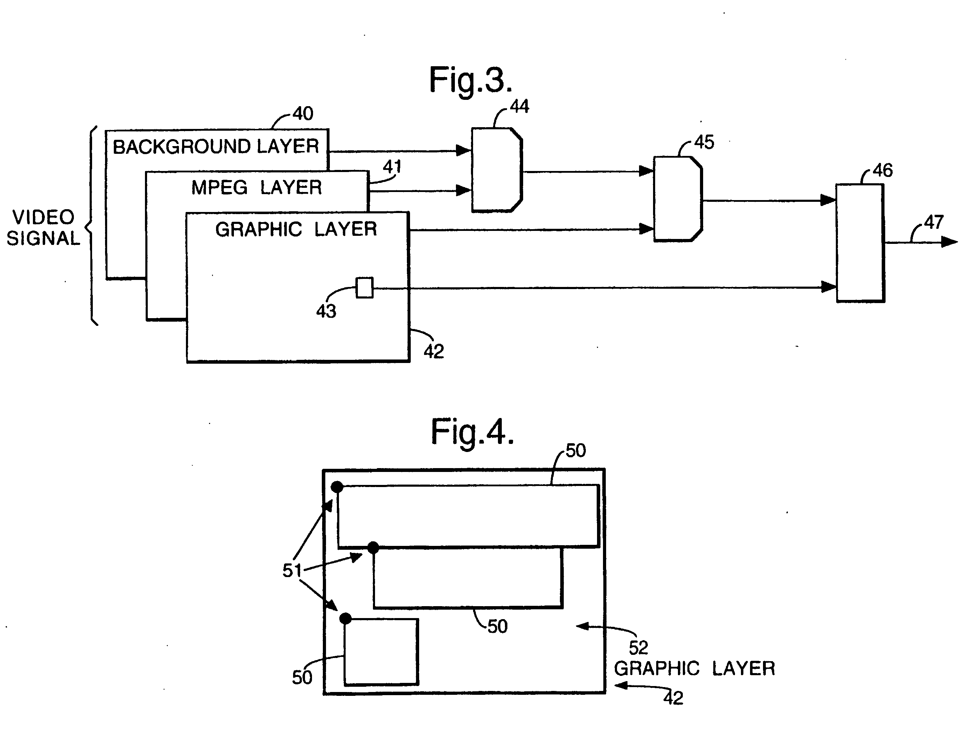

Referring now to Figure 3, the functionality of the graphic processor 36 will now be described. As discussed above, the graphic processor receives and processes real time video data from the video decoder 34 together with graphic data received from the general processor 20 in order to generate an overlaid screen display.

As shown in Figure 3, the graphic processor 36 is adapted to process input data divided into four distinct layers; a background layer 40, an MPEG layer 41, a graphic layer 42 and a cursor layer 43. As will be understood, the background layer 40 corresponds to the lowest layer of the screen display, the other layers being progressively superimposed with varying degrees of translucency or opacity over this layer.

In the case where the decoder is configured to display a broadcast video signal, the background and MPEG layers 40, 41 correspond to the stream of data received from the video decoder 34, the layer 40 corresponding to MPEG still pictures received from the decoder 34 and the layer 41 corresponding to a moving video MPEG signal received from the decoder. The division of a video signal into a fixed and a changing part is a known characteristic of MPEG compression.

Other configurations of the decoder are possible, for example, where the background and MPEG layers 40, 41 are completed by picture data in any number of formats received from the processor 20. For example, in the case where the decoder is acting in web browser configuration, the processor 20 may supply still and/or moving picture data to complete the layers 40, 41. The layer 40 may equally correspond, for example, to a background colour and the layer 41 to one or more windows displayed over the background and containing, for example, information, moving icons or the like.

Still and moving image data from the background and MPEG layers 40, 41 arc mixed together by the graphic processor 36, as represented by the element 44, and a combined output provided. Mixing of the MPEG layer information 41 over the background layer 40 by the graphic processor may carried out using a so-called alpha blending factor to permit a greater or lesser degree of translucency of the pixels in the MPEG layer image. In the case of a moving video image received from the video decoder 34, the same blending factor is used for all pixels within the video sequence. In the case of picture data from the central processor 20, the value of the blending factor for the layer 41 may be different for different parts of the screen.

The graphic layer 42 is used for texts, shapes, icons etc that will be displayed on the screen over the images taken from the layers 40, 41, for example, to permit display of a moving icon or the like generated by the processor 20 over a real-time video sequence taken from the video decoder 34. As this embodiment of the present invention relates primarily to treatment of data in this layer, the characteristics of data in this layer will be described in more detail below in relation to Figure 4.

In a similar manner to the blending carried out for the layers 40, 41, the element 45 carries out a blending of the graphic layer 42 with the combined output of the layers 40, 41. As will be described, different regions within the graphic layer 42 may be assigned a different blending factor and a corresponding different level of translucency depending on the characteristics of the data within each region.

A final layer, the cursor layer, is shown at 43 and represents an opaque cursor image, generated by hardware under control of the central processor 20 and superimposed over all the previous layers. As shown at 46, this layer is combined with the summed output from the combination of all previous layers to generate a final combined output 47 sent to the encoder 37 for subsequent display. Unlike the previous layers, the cursor presents a continuously opaque appearance and is superimposed over the combined layers without any blending.

Turning now to Figure 4, the graphic layer is divided in operation into one or more rectangular regions 50, each region being defined by its width, its height, its display co-ordinate 51 and the colour system used within that region. Any pixel in the layer not belonging to a designated region, as shown at 52, is kept transparent. The display co-ordinate 51 is defined as the co-ordinate of the upper left hand corner of the region, as shown. The pixel size of all the regions is never more than the full screen resolution, that is, 720 X 576 for PAL, 720 X 480 for NTSC.

Concerning the colour system to be used in a region, the information provided to the graphic processor 36 to construct the layer is coded in pixmap form, each pixel being identified by a co-ordinate and a colour reference. In practice, a number of pixmap formats may be handled by the graphic processor, such as:
CLUT4: 4 bits/pixel addressing a colour look-up table (CLUT) with 16 entries
CLUT8: 8 bits/pixel addressing a colour look-up table (CLUT) with 256 entries
RGB16: 16 bits/pixel specifying the red/green/blue mix for each pixel

In the case of the RGB16 format, a colour to be displayed is simply defined with reference to the preponderance of each of the primary colours red/green/blue used by the system to generate a colour.

In the case of a CLUT type format, each pixel includes a reference to a designated colour value in a look-up table. This colour in turn is defined by a 24 bit red/green/blue value eventually used by the system to generate a colour. A 6 bit alpha blending factor may also be associated with each colour value (see below).

As indicated above, the size of the look-up table and the number of colours available can vary, e.g. to define an image with reference to 16 or 256 colours. Equally, the colours defined within a look-up table can vary between tables, e.g. one table defining more colours in a certain part of the spectrum than in another part. Before display of a region, the look-up table is loaded into the graphic processor.

The graphics processor 36 may resize in real time each region and move horizontally and vertically a region on the screen, on the condition that there is no overlapping between regions. Additionally, as mentioned above, each region may be blended independently with the layers below using a particular alpha blending factor. In the case of each of the formats, the following possibilities exist:
CLUT4: A global 6 bit alpha blending factor applied throughout the region OR each colour entry in the table has a 6 bit alpha blending factor. One colour value may be transparent.
CLUT8: A global 6 bit alpha blending factor applied throughout the region OR each colour entry in the table has a 6 bit alpha blending factor. One colour value may be transparent.
RGB16: A global 6 bit alpha blending factor applied throughout the region.

The pixmap formats discussed above are distinct from the compressed multimedia formats conventionally used to transmit the images eventually to be displayed in the graphic layer. For example, a picture to be displayed in one of the graphic regions may be compressed as an MPEG still picture, a JPEG format picture, a GIF format picture or a PNG format picture. In the following description the term "picture" will always be used to refer to image data in a compressed format.

The MPEG format has been described in the introduction in relation to the ISO developed standards. The JPEG and GIF standards are equally well-known multimedia formats, often found in images sent via the internet, whilst the PNG format is, at the time of writing, a more recent standard introduced as a competitor to the proprietary GIF standard. As will be discussed below, images received in the MPEG, JPEG, GIF or PNG formats are decompressed by a routine within the processor 20 into one of the CLUT or RGB pixmap formats discussed above.

It will of course be understood that, whilst the description refers in this instance to specific display (or pixmap) formats and transmission (or compressed) formats, the present invention is in no way limited to the use of these particular formats.

In the case of GIF and PNG type formats, these compressed formats are based on original image files that include a look-up table. Direct decompression of a GIF or PNG compressed picture will result in an image in a CLUT pixmap format. However, as will be discussed, a GIF or PNG picture may also be decompressed directly into the RGB pixmap format, for example. Similarly, whilst an MPEG/JPEG picture is compressed in an RGB mode, such that it may be directly decompressed into a 16 bit RGB pixmap, there may be some circumstances in which it may be desired to transform the picture into a CLUT format.

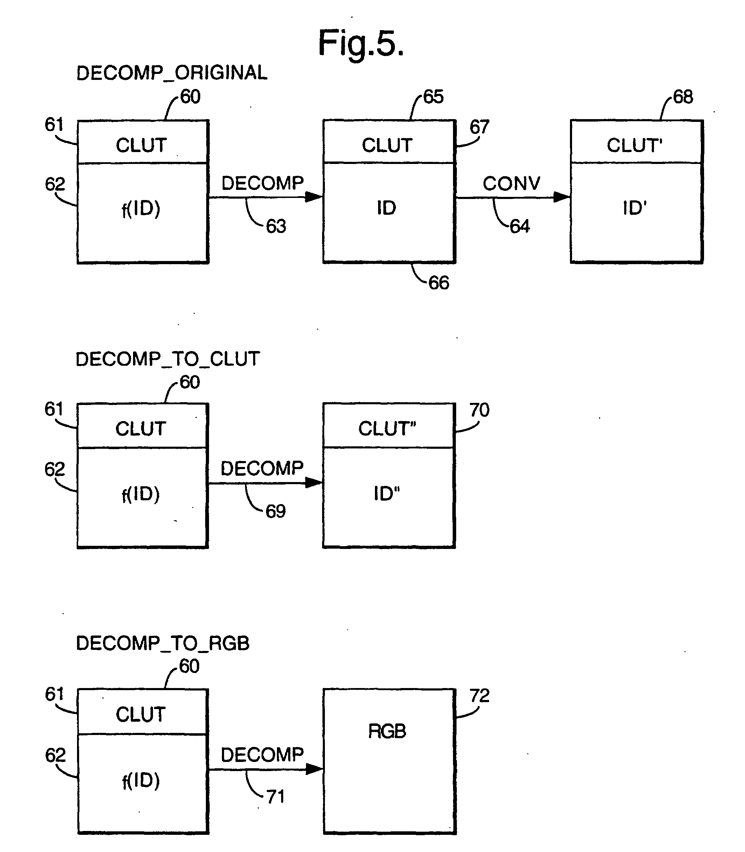

Figure 5 represents schematically possible decompression and conversion steps that may be carried out by the general processor 20 on a received compressed GIF or PNG type picture according to this embodiment of the invention. Three types of decompression activated in response to three decompression commands, DECOMP_ORIGINAL, DECOMP_TO_CLUT and DECOMP_TO_RGB are shown. The decompression steps are illustrated in relation to a CLUT formatted picture, but similar decompression steps may also be effected in respect of JPEG and MPEG still pictures in response to the same commands.

DECOMP_ORIGINAL. A received GIF/PNG picture 60 is shown, comprising a look-up table CLUT indicated at 61 and pixel ID data f(ID) defining colour values for each pixel in the image, as indicated at 62. In the uppermost decompression step 63, the picture in the transmitted file is decompressed and stored in memory in its substantially original format as shown at 65, i.e. in a CLUT mode with a set of pixel data 66 referring to its associated CLUT table 67.

The number of entries in the CLUT table (16 or 256) and the subsequent degree of colour resolution depends on the original format of the table. Similarly, the exact RGB bit value associated with each colour is defined by the CLUT table in question, which is preserved in an unchanged form.

In the present system, the resulting decompressed image is stored in memory. In a subsequent conversion step shown at 64, the image may be further converted into a second pixmap format 68, such as an alternative CLUT format, also stored in the system memory.

For example, an image comprising a 256 entry CLUT table may be converted into an image with a 16 entry CLUT table. Alternatively, one characteristic CLUT table may be transformed into a different CLUT table, with different RGB values associated with some or all of the entries. At the same time as the transformation of the CLUT table, the pixel ID values will be transformed. The necessary algorithms to carry out these transformations will be known to one skilled in the art.

The advantage of this double decompression/conversion as compared to the other decompression steps described below will be understood in relation to the zoning of the graphic layer shown in Figure 4. In a PC environment, the size of the memory and processing capability of the PC means that many image windows, each having a particular CLUT table, may be opened. In this case, an image may always be directly decompressed and displayed in its original format.

In contrast, in a decoder environment, memory and processor constraints lead to the arrangement of regions described above, in which each region 50 is associated with a particular pixmap format. In one example, one region may be associated with a CLUT4 format, with a predetermined 16 entry look-up table held by one or more images already displayed in this region, whilst another region may be associated with CLUT8 format with another predetermined look-up table of 256 entries.

In the case of a new picture file defining, for example, an icon to be displayed in both of these regions, the picture file will first be decompressed according to the DECOMP_ORIGINAL command to provide a file with the original CLUT table associated with this image. This original file, stored in memory, may then be reduced and converted to the CLUT4 format used by the first region, as well as to the CLUT8 format (with associated specific CLUT table value) used by the second region. Further reconversions may effected at will on the original file.

In contrast, if the original picture file has never been decompressed, but has been immediately converted to a standard pixmap value used in one region (see below), it may not be possible to effectively reconvert the image in this format to a second format associated with another region. For example, where a CLUT8 picture is simultaneously decompressed and convened into a standard CLUT4 format, there will be a loss of information associated with the image, rendering any reconversion to a CLUT8 format unreliable.

Nevertheless, in some circumstances it may be desirable to fix the end format of all pixmap files in advance of conversion. In this case, the following commands may be given to general processor.

DECOMP_TO_CLUT. With this command, the picture, whatever the format of the original file (CLUT4, CLUT8, RGB) is decompressed at 69 and converted in a CLUT format pixmap shown at 70. The resolution of the CLUT, as well as the RGB values of each of its entries is imposed at the moment of decompression.

DECOMP_TO_RGB. With this command, the picture, whatever the format of the original file (CLUT4, CLUT8, RGB) is decompressed at 71 and converted in a RGB format pixmap shown at 72. The resolution of the RGB format is fixed at the moment of decompression.

In the case of a picture originally in true colour or MPEG/JPEG format, the command DECOMP_ORIGINAL will return a decompressed image in RGB. Although the format of the decompressed file corresponds to the original (i.e. no look-up table), a slight change of resolution may require a conversion from true colour to RGB16 to be provided at the moment of encryption. The command DECOMP_TO_CLUT acting on an MPEG/JPEG file will decompress and convert the picture into an image in CLUT format, the resolution of the CLUT as well as the values of each of its entries being imposed at the moment of decompression. The command DECOMP_TO_RGB will have the same effect on the picture in this case as the command DECOMP_ORJGINAL, that is, to decompress and convert the picture from true colour to RGB16 format.

As will be understood, the decompression/conversion algorithms necessary to carry out the above operations are known. However, the application of such algorithms to create each of the stored files indicated above is not known in the context of decoder technology. In particular, the decompression of a picture file to an original format file which is stored and may be converted as desired is not known in this field.

Similarly, whilst the description refers to the use of the main or general processor chip to carry out the necessary decompression and conversion steps in addition to its other tasks, these steps may also be carried out by a dedicated processor.

## Claims

1. A decoder (13) for a digital audiovisual transmission system, the decoder comprising a processor (20) for decompressing and displaying compressed digital picture data and a memory, **characterised in that** the processor is adapted to decompress (63) and store an image file in its substantially original format and subsequently to convert (64) the image file to at least a second format for storage and display, the first and second format versions of the image file being stored contemporaneously in the memory.

2. A decoder as claimed in claim 1 in which the processor is adapted to convert the image file into a plurality of formats stored contemporaneously with the original version in a memory of the decoder.

3. A decoder as claimed in claim 1 or 2 in which the processor is adapted to read and display multiple format versions of an image file stored at that time.

4. A decoder as claimed in any preceding claim in which the processor is adapted to define a plurality of regions in a graphic layer corresponding to a region of the display, each region being defined in part by a location co-ordinate and by the format version of the image files that are processed by the graphic processor and displayed in this region.

5. A decoder as claimed in claim 4 in which the processor is adapted to convert an original image file destined to be displayed in a region into a version corresponding to the format version currently used in that region.

6. A decoder as claimed in claim 4 or 5 in which the processor is adapted to process images in the graphic layer superimposed over real-time audiovisual digital data corresponding to one or more layers displayed on the screen beneath the graphic layer.

7. A decoder as claimed in any preceding claim in which the processor is adapted to decompress picture data sent in a compression standard that uses a look-up table.

8. A decoder as claimed in any preceding claim in which the processor is adapted to decompress picture data sent in a standard that uses a red/green/blue colour value associated with each pixel.

9. A decoder as claimed in any preceding claim in which the processor is further adapted to directly decompress picture data regardless its compression format into a image file of a predetermined format.

10. A decoder as claimed in claim 9 in which the processor may be further adapted to directly decompress picture data into a format which uses a look-up table.

11. A decoder as claimed in claim 9 or 10 in which the processor may be further adapted to directly decompress picture data into a format which uses a red/green/blue colour value associated with each pixel.

12. A decoder as claimed in any preceding claim in which the processor comprises a general processor for decompressing digital picture data and a graphic processor for preparing the decompressed data for display.

13. A method of digital image processing in a decoder for a digital audiovisual transmission system, the decoder comprising a processor for decompressing compressed digital picture data and for preparing the decompressed data for display, **characterised in that** the processor decompresses and stores an image file in its substantially original format and subsequently converts the image file to at least a second format for storage and display, the first and second format versions of the image file being stored contemporaneously in a memory of the decoder.

14. A method as claimed in claim 13 in which the image file is converted into a plurality of formats stored contemporaneously with the original version in a memory of the decoder.

15. A method as claimed in claim 13 or 14 in multiple format versions of an image file stored at that time are read and displayed.

16. A method as claimed in any of claims 13 to 15 in which a plurality of regions are defined in a graphic layer corresponding to a region of the display, each region being defined in part by a location co-ordinate and by the format version of the image files that are processed and displayed in this region.

17. A method as claimed in claim 16 in which an original image file destined to be displayed in a region is converted into a version corresponding to the format version currently used in that region.

18. A method as claimed in claim 16 or 17 in which images in the graphic layer superimposed over real-time audiovisual digital data corresponding to one or more layers displayed on the screen beneath the graphic layer are processed .

19. A method as claimed in any of claims 13 to 18 in which picture data sent in a compression standard that uses a look-up table is decompressed.

20. A method as claimed in any of claims 13 to 19 in which picture data sent in a standard that uses a red/green/blue colour value associated with each pixel is decompressed.

21. A method as claimed in any of claims 13 to 20 in which picture data is directly decompressed regardless its compression format into a image file of a predetermined format.

22. A method as claimed in claim 21 in which picture data is directly decompressed into a format which uses a look-up table.

23. A method as claimed in claim 21 or 22 in which picture data is directly decompressed into a format which uses a red/green/blue colour value associated with each pixel.

## Patentansprüche

1. Decoder (13) für ein digitales audiovisuelles Übertragungssystem, wobei der Decoder aufweist, einen Prozessor (20) zum Dekomprimieren und wiedergeben von komprimierten digitalen Bilddaten, und einen Speicher, **dadurch gekennzeichnet, dass** der Prozessor angepasst ist, um ein Bildfeld in seinem im Wesentlichen ursprünglichen Format zu dekomprimieren und zu speichern, und nachfolgend das Bildfeld in zumindest ein zweites Format zur Speicherung und Wiedergabe zu konvertieren, wobei die Versionen des ersten und des zweiten Formates des Bildfeldes gleichzeitig in dem Speicher gespeichert werden.

2. Decoder nach Anspruch 1, in dem der Prozessor angepasst ist, um das Bildfeld in mehrere Formate zu konvertieren, die gleichzeitig mit der Originalversion in einem Speicher des Decoders gespeichert werden.

3. Decoder nach einem der Ansprüche 1 oder 2, in dem der Prozessor angepasst ist, um mehrere Formatversionen eines Bildfeldes, das zu der Zeit gespeichert ist, zu lesen und wiederzugeben.

4. Decoder nach irgendeinem der voranstehenden Ansprüche, in dem der Prozessor angepasst ist, um mehrere Bereiche in einer grafischen Schicht zu bestimmen, die einem Bereich der Anzeige bzw. des Displays entsprechen, wobei jeder Bereich teilweise durch eine Ortskoordinate und durch die Formarversion der Bildfelder bestimmt ist, die durch den Grafikprozessor verarbeitet und in diesem Bereich wiedergegeben werden.

5. Decoder nach Ansgruch 4, in dem der Prozessor angepasst ist, um ein Originalbildfeld, das zur Wiedergabe in einem Bereich bestimmt ist, in eine Version zu konvertieren, entsprechend der gegenwärtig in der Region bzw. dem Bereich verwendeten Formatversioa,

6. Decoder nach Anspruch 4 oder 5, in dem der Prozessor angepasst ist, um Bilder in der grafischen Schicht zu prozessieren bzw. zu verarbeiten, die über audiovisuelle Echtzeitdigitaldaten gemäß einer oder mehrerer Schichten, die auf dem Schirm unterhalb der grafischen Schicht wiedergegeben werden, überlagert werden.

7. Decoder nach einem der voranstehenden Ansprüche, in dem der Prozessor angepasst ist, um Bilddaten zu dekomprimieren, die in einem Kompressionsstandard gesendet worden sind, der eine Tabelle verwendet.

8. Decoder nach einem der voranstehenden Ansprüche, in dem der Prozessor angepasst ist, Bilddaten zu dekomprimieren, die in einem Standard gesendet worden sind, der einen Rot-/Grün-/Blau-Farbwert verwendet, der mit jedem Bildelement verknüpft ist.

9. Decoder nach einem der voranstehenden Ansprüche, in welchem der Prozessor ferner angepasst ist, um unmittelbar Bilddaten ungeachtet ihres Kompressionsformates in ein Bildfeld eines vorbestimmten Formates zu dekomprimieren.

10. Decoder nach Anspruch 9, in dem der Prozessor ferner angepasst sein kann, um unmittelbar Bilddaten in ein Format zu dekomprimieren, welches eine Tabelle verwendet.

11. Decoder nach Anspruch 9 oder 10, in dem der Prozessor ferner angepasst sein kann, um unmittelbar Bilddaten in ein Format zu dekomprimieren, das einen Rot-/Grün-/Blau-Farbwert, der mit jedem Bildelement verknüpft ist, verwendet.

12. Decoder nach einem der voranstehenden Ansprüche, in dem der Prozessor einen allgemeinen Prozessor zum Dekomprimieren von digitalen Bilddaten und einen Grafikprozessor zur Vorbereitung der dekomprimierten Daten zur Wiedergabe aufweist.

13. Verfahren zur digitalen Bildverarbeitung in einem Decoder für ein digitales audiovisuelles Übertragungssystem, wobei der Decoder aufweist, einen Prozessor zur Dekomprimierung komprimierter digitaler Bilddaten und zur Vorbereitung der dekomprimierten Daten zur Wiedergabe, **dadurch gekennzeichnet, dass** der Prozessor ein Bildfeld in sein im Wesentlichen ursprüngliches Format dekomprimiert und speichert, und nachfolgend das Bildfeld in zumindest ein zweites Format zur Speicherung und Wiedergabe konvertiert, wobei die Versionen des Bildfeldes des ersten Formates und des zweiten Formates gleichzeitig in einem Speicher des Decoders gespeichert werden.

14. Verfahren nach Anspruch 13, in dem das Bildfeld in mehrere Formate konvertiert wird, die gleichzeitig mit der Originalversion in einem Speicher des Decoders gespeichert werden.

15. Verfahren nach Anspruch 13 oder 14, bei dem mehrere Formatversionen eines Bildfeldes, das zu der Zeit gespeichert ist, gelesen und wiedergegeben werden.

16. Verfahren nach irgendeinem der Ansprüche 13 bis 15, bei dem mehrere Bereiche in einer grafischen Schicht entsprechend zu einem Bereich der Wiedergabe bzw. auf dem Display definiert sind, wobei jeder Bereich zum Teil durch eine Ortskoordinate und durch die Formatversion der Bildfelder definiert ist, die verarbeitet werden und in diesem Bereich angezeigt warden.

17. Verfahren nach Anspruch 16, bei dem ein Originalbildfeld, das zur Wiedergabe in einem Bereich bestimmt ist, in eine Version entsprechend der Formatversion, die gegenwärtig in diesem Bereich verweadet wird, konvertiert wird.

18. Verfahren nach Anspruch 16 oder 17, bei welchem Bilder in der grafischen Schicht über audiovisuelle Echtzeitdigitaldaten entsprechend zu einer oder mehreren Schichten überlagert werden, die auf dem Schirm unterhalb der grafischen Schicht wiedergegeben werden, verarbeitet werden.

19. Verfahren nach irgendeinem der Ansprüche 13 bis 18, bei dem Bilddaten, die in einem Kompressionsstandard gesendet worden sind, der eine Tabelle verwendet, dekomprimiert werden.

20. Verfahren nach irgendeinem der Ansprüche 13 bis 19, in dem Bilddaten, die in einem Standard gesendet worden sind, der Rot-/Grün-/Blau-Farbwerte verwendet, die mit jedem Bildelement verknüpft sind, dekomprimiert werden.

21. Verfahren nach einem der Ansprüche 13 bis 20, in dem Bilddaten unmittelbar ungeachtet ihres Kompressionsformates in ein Bildfeld eines vorbestimmten Formates dekomprimiert werden.

22. Verfahren nach Anspruch 21, in dem Bilddaten unmittelbar in ein Format dekomprimiert werden, das eine Tabelle verwendet.

23. Verfahren nach einem der Ansprüche 21 oder 22, in dem Bilddaten unmittelbar in ein Format dekomprimiert werden, welches Rot-/Grün-/Blau-Farbwerte, die mit jedem Bildelement verknüpft sind, verwendet.

## Revendications

1. Décodeur (13) pour un système de transmission audiovisuel numérique, le décodeur comprenant un processeur (20) pour décompresser et afficher des données d'image numériques compressées et une mémoire, **caractérisé en ce que** le processeur est adapté pour décompresser (63) et mémoriser un fichier d'image sensiblement dans son format d'origine et pour convertir (64) par la suite le fichier d'image au moins en un deuxième format pour la mémorisation et l'affichage, les première et deuxième versions de format du fichier d'image étant mémorisées en même temps dans la mémoire.

2. Décodeur selon la revendication 1, dans lequel le processeur est adapté pour convertir le fichier d'image en une pluralité de formats mémorisés en même temps que la version d'origine dans une mémoire du décodeur.

3. Décodeur selon la revendication 1 ou 2, dans lequel le processeur est adapté pour lire et afficher de multiples versions de format d'un fichier d'image mémorisées à cet instant.

4. Décodeur selon l'une quelconque des revendications précédentes, dans lequel le processeur est adapté pour définir une pluralité de régions dans une couche graphique correspondant à une région de l'affichage, chaque région étant définie en partie par une coordonnée d'emplacement et par la version de format des fichiers d'images qui sont traités par le processeur graphique et affichés dans cette région.

5. Décodeur selon la revendication 4, dans lequel le processeur est adapté pour convertir un fichier d'image d'origine destiné à être affiché dans une région en une version correspondant à la version de format actuellement utilisée dans cette région.

6. Décodeur selon la revendication 4 ou 5, dans lequel le processeur est adapté pour traiter des images dans la couche graphique superposées à des données numériques audiovisuelles temps réel correspondant à une ou plusieurs couches affichées sur l'écran au-dessous de la couche graphique.

7. Décodeur selon l'une quelconque des revendications précédentes, dans lequel le processeur est adapté pour décompresser des données d'image envoyées dans une norme de compression qui utilise une table de correspondance.

8. Décodeur selon l'une quelconque des revendications précédentes, dans lequel le processeur est adapté pour décompresser des données d'image envoyées dans une norme qui utilise une valeur de couleur rouge/verte/bleue associée à chaque pixel.

9. Décodeur selon l'une quelconque des revendications précédentes, dans lequel le processeur est, en outre, adapté pour décompresser directement des données d'image indépendamment de leur format de compression en un fichier d'image d'un format prédéterminé.

10. Décodeur selon la revendication 9, dans lequel le processeur peut, en outre, être adapté pour décompresser directement des données d'image en un format qui utilise une table de correspondance.

11. Décodeur selon la revendication 9 ou 10, dans lequel le processeur peut, en outre, être adapté pour décompresser directement des données d'image en un format qui utilise une valeur de couleur rouge/verte/bleue associée à chaque pixel.

12. Décodeur selon l'une quelconque des revendications précédentes, dans lequel le processeur comprend un processeur général pour décompresser des données d'image numériques et un processeur graphique pour préparer les données décompressées pour l'affichag

13. Procédé de traitement d'image numérique dans un décodeur pour un système de transmission audiovisuel numérique, le décodeur comprenant un processeur pour décompresser des données d'image numériques compressées et pour préparer les données décompressées pour l'affichage, **caractérisé en ce que** le processeur décompresse et mémorise un fichier d'image sensiblement dans son format d'origine et convertit par la suite le fichier d'image au moins en un deuxième format pour la mémorisation et l'affichage, les première et deuxième versions de format du fichier d'image étant mémorisées en même temps dans une mémoire du décodeur.

14. Procédé selon la revendication 13, dans lequel le fichier d'image est converti en une pluralité de formats mémorisés en même temps que la version d'origine dans une mémoire du décodeur.

15. Procédé selon la revendication 13 ou 14, dans lequel de multiples versions de format d'un fichier d'image mémorisées à cet instant sont lues et affichées.

16. Procédé selon l'une quelconque des revendications 13 à 15, dans lequel une pluralité de régions sont définies dans une couche graphique correspondant à une région de l'affichag chaque région étant définie en partie par une coordonnée d'emplacement et par la version de format des fichiers d'images qui sont traités et affichés dans cette région.

17. Procédé selon la revendication 16, dans lequel un fichier d'image d'origine destiné à être affiché dans une région est converti en une version correspondant à la version de format actuellement utilisée dans cette région.

18. Procédé selon la revendication 16 ou 17, dans lequel des images dans la couche graphique superposées à des images numériques audiovisuelles temps réel correspondant à une ou plusieurs couches affichées sur l'écran au-dessous de la couche graphique sont traitées.

19. Procédé selon l'une quelconque des revendications 13 à 18, dans lequel des données d'image envoyées dans une norme de compression qui utilise une table de correspondance sont décompressées.

20. Procédé selon l'une quelconque des revendications 13 à 19, dans lequel des données d'image envoyées dans une norme qui utilise une valeur de couleur rouge/verte/bleue associée à chaque pixel sont décompressées.

21. Procédé selon l'une quelconque des revendications 13 à 20, dans lequel des données d'image sont directement décompressées indépendamment de leur format de compression en un fichier d'image d'un format prédéterminé.

22. Procédé selon la revendication 21, dans lequel des données d'image sont directement décompressées en un format qui utilise une table de correspondance.

23. Procédé selon la revendication 21 ou 22, dans lequel des données d'image sont directement décompressées en un format qui utilise une valeur de couleur rouge/verte/bleue associée à chaque pixel.
